# FASCICULE DE BREVET EUROPEEN

(11) **EP 3 857 149 B1**
(45) Date de publication et mention de la délivrance du brevet: **09.10.2024**
(21) Numéro de dépôt: 19795257.5
(22) Date de dépôt: 25.09.2019
(51) Int. Cl.: F28D 1/04, F28D 21/00, F01P 11/10, F01P 5/02, F01P 3/18, B60K 11/08, B60K 11/04, B60K 11/02, F28D 1/02, F01P 5/06, F04D 17/04, F04D 25/16

(54) **MODULE D'ÉCHANGE THERMIQUE DE VÉHICULE AUTOMOBILE**
WÄRMETAUSCHERMODUL FÜR AUTOMOBILE
HEAT EXCHANGER MODULE FOR AUTOMOBILES

(30) Priorité: 27.09.2018 FR 1858868
(43) Date de publication de la demande: 04.08.2021
(73) Titulaire: Valeo Systemes Thermiques, 78322 Le Mesnil Saint Denis Cedex (FR)
(72) Inventeur: LISSNER, Michael, 78322 LE MESNIL SAINT DENIS CEDEX (FR); AZZOUZ, Kamel, 78322 LE MESNIL SAINT DENIS CEDEX (FR); MAMMERI, Amrid, 78322 LE MESNIL SAINT DENIS CEDEX (FR); GARNIER, Sébastien, 78322 LE MESNIL SAINT DENIS CEDEX (FR)
(74) Mandataire: Valeo Systèmes Thermiques
(86) Numéro de dépôt international: PCT/FR2019/052243
(87) Numéro de publication internationale: WO 2020/065204

(56) Documents cités:
- EP-A2- 2 253 493
- DE-A1- 3 108 485
- FR-A1- 2 524 061
- FR-A1- 2 524 061
- US-A- 4 063 431
- US-A- 5 192 478
- US-A- 5 476 138
- US-A1- 2005 115 704
- US-A1- 2005 115 704

## Description

L'invention a pour objet un module d'échange thermique pour véhicule automobile.

L'invention se rapporte au domaine de l'automobile, et plus particulièrement au domaine de la circulation d'air pour le refroidissement du moteur et de ses équipements.

Les véhicules à moteur, notamment moteur électrique, ont besoin d'évacuer les calories que génère leur fonctionnement et sont pour cela équipés d'échangeurs de chaleur. Un échangeur de chaleur de véhicule automobile comprend généralement des tubes, dans lesquels un fluide caloporteur est destiné à circuler, notamment un liquide tel que l'eau, et des éléments d'échange de chaleur reliés à ces tubes, souvent désignés par le terme « ailettes » ou « intercalaires ». Les ailettes permettent d'augmenter la surface d'échange entre les tubes et l'air ambiant.

Toutefois, afin d'augmenter encore l'échange de chaleur entre le fluide caloporteur et l'air ambiant, il est fréquent qu'un dispositif de ventilation soit utilisé en sus, pour générer ou accroitre un flux d'air dirigé vers les tubes et les ailettes.

De façon connue, un tel dispositif de ventilation comprend un ventilateur à hélice, aussi appelé ventilateur axial.

Le flux d'air généré par les pales d'un tel ventilateur est turbulent, notamment en raison de la géométrie circulaire de l'hélice, et n'atteint en général qu'une partie seulement de la surface de l'échangeur de chaleur (zone circulaire de l'échangeur faisant face à l'hélice du ventilateur). L'échange de chaleur ne se fait donc pas de façon homogène sur toute la surface des tubes et des ailettes.

En outre, lorsque la mise en marche du ventilateur ne s'avère pas nécessaire (typiquement lorsque l'échange de chaleur avec de l'air ambiant non accéléré suffit à refroidir le fluide caloporteur circulant dans l'échangeur), les pales obstruent en partie l'écoulement de l'air ambiant vers les tubes et les ailettes, ce qui gêne la circulation d'air vers l'échangeur et limite ainsi l'échange de chaleur avec le fluide caloporteur.

Cette intégration est d'autant plus compliquée dans un véhicule électrique, dont la face avant laisse peu de place pour y loger les éléments de refroidissement du véhicule.

L'invention vise à améliorer ce type de ventilation avec un ventilateur tangentiel. Un module d'échange thermique avec un dispositif de ventilation comprenant un ventilateur tangentiel selon le préambule de la revendication 1 est connu du document US 2005/115704 A1.

L'invention a ainsi pour objet un dispositif de ventilation destiné à générer un flux d'air traversant un échangeur de chaleur de véhicule automobile, comprenant :
- au moins un ventilateur tangentiel de mise en mouvement d'un flux d'air traversant l'échangeur de chaleur,
- un logement agencé pour recevoir un ou plusieurs échangeurs de chaleur, le logement étant placé en amont du ventilateur tangentiel de sorte que, en fonctionnement du ventilateur, de l'air soir aspiré par le ventilateur et cet air aspiré traverse d'abord le logement pour échangeur de chaleur avant de passer dans le ventilateur tangentiel,
- un répartiteur amont de l'air aspiré, répartiteur amont agencé pour répartir l'air aspiré avant que cet air ne traverse le logement pour échangeur de chaleur.

Grâce à l'invention, du fait de la présence du répartiteur, le flux d'air qui traverse le ou les échangeurs de chaleur est relativement homogène, ce qui est particulièrement avantageux en termes de performances. Ce répartiteur permet ainsi de redresser le flux d'air entrant dans le ou les échangeurs et de distribuer uniformément le flux d'air à travers le ou les échangeurs.

De plus la tendance actuelle est de réduire l'entrée d'air en face avant du véhicule, ce qui rend plus difficile d'assurer une distribution d'air homogène sur le ou les échangeurs. L'invention permet grâce au répartiteur d'assurer cet écoulement homogène à travers le ou les échangeurs même si l'entrée d'air est de dimensions réduites.

Par ailleurs le fait que le ou les ventilateurs tangentiels soient derrière le ou les échangeurs est avantageux car ce ou ces ventilateurs sont moins exposés au risque d'être endommagés par des cailloux.

Selon l'un des aspects de l'invention, le répartiteur amont comprend un guide d'air amont ayant une forme de convergent, à savoir la section transversale de ce guide d'air diminue au fur et à mesure que l'on s'éloigne de l'entrée de ce guide.

Selon l'un des aspects de l'invention, ce guide d'air amont présente une forme courbe, notamment non droite sur toute sa longueur. Par exemple cette forme du convergent peut être sensiblement, au moins sur une portion de sa longueur, parabolique ou hyperbolique.

Selon l'un des aspects de l'invention, ce guide d'air amont comporte une entrée d'air et est agencé de manière à ce que son extrémité opposée à l'entrée d'air est agencée de manière à être sensiblement adjacent à l'échangeur de chaleur qui est destiné à être placé dans le logement.

Selon l'un des aspects de l'invention, le guide d'air est agencé en regard de sensiblement toute la surface de l'échangeur de chaleur placé dans le logement.

Selon l'un des aspects de l'invention, le répartiteur comporte, outre le guide d'air, au moins un déflecteur agencé dans le guide d'air amont et agencé pour orienter le flux d'air vers le logement pour échangeur de chaleur.

Selon l'un des aspects de l'invention, le répartiteur comporte une pluralité de déflecteurs amont disposés en rangée, cette rangée étant notamment sensiblement parallèle à une surface de l'échangeur de chaleur placé dans le logement.

Selon l'un des aspects de l'invention, les déflecteurs de la rangée sont tous identiques.

Selon l'un des aspects de l'invention, certains déflecteurs amont de la rangée sont différents entre eux.

Selon l'un des aspects de l'invention, les déflecteurs amont sont disposés à moins de 5 cm, notamment moins de 2 cm ou moins de 1 cm de l'échangeur de chaleur.

Selon l'un des aspects de l'invention, chaque déflecteur comporte une ailette, notamment ayant une forme de courbe.

Selon l'un des aspects de l'invention, chaque ailette comporte un rebord courbé en direction du logement pour échangeur de chaleur.

Selon l'un des aspects de l'invention, le guide d'air amont comporte une paroi commune avec le logement pour échangeur de chaleur, cette paroi commune étant notamment une paroi d'extrémité du logement pour échangeur de chaleur.

Selon l'un des aspects de l'invention, le dispositif de ventilation comporte un guide d'air aval agencé en aval du ou des échangeurs de chaleur disposés dans le logement.

Selon l'un des aspects de l'invention, ce guide d'air présente une forme de divergent, à savoir la section transversale de ce guide d'air augmente au fur et à mesure que l'on se rapproche de la sortie de ce guide aval.

Selon l'un des aspects de l'invention, ce guide d'air aval présente une forme courbe, notamment non droite sur toute sa longueur. Par exemple cette forme du divergent peut être sensiblement, au moins sur une portion de sa longueur, parabolique ou hyperbolique.

Selon l'un des aspects de l'invention, ce guide d'air aval comporte une sortie d'air et est agencé de manière à ce que son extrémité opposée à la sortie d'air est agencée de manière à être sensiblement adjacent à l'échangeur de chaleur qui est destiné à être placé dans le logement.

Selon l'un des aspects de l'invention, le guide d'air aval est agencé en regard de sensiblement toute la surface de l'échangeur de chaleur placé dans le logement.

Selon l'un des aspects de l'invention, le dispositif comporte un ou plusieurs déflecteurs aval agencés pour orienter le flux d'air sortant du logement pour un ou plusieurs échangeurs de chaleur, vers la sortie du guide d'air aval.

Selon l'un des aspects de l'invention, les déflecteurs aval de la rangée sont tous identiques.

Selon l'un des aspects de l'invention, certains déflecteurs aval de la rangée sont différents entre eux.

Selon l'un des aspects de l'invention, les déflecteurs aval sont disposés à moins de 5 cm, notamment moins de 2 cm ou moins de 1cm de l'échangeur de chaleur.

Selon l'un des aspects de l'invention, chaque déflecteur aval comporte une ailette, notamment ayant une forme de courbe.

Selon l'un des aspects de l'invention, chaque ailette aval comporte un rebord courbé en direction du logement pour échangeur de chaleur.

Selon l'un des aspects de l'invention, les ailettes amont et/ou aval sont présentes sur sensiblement toute l'étendue du ou des échangeurs de chaleur, ou sur une majeure partie de cette étendue.

Selon l'un des aspects de l'invention, les échangeurs de chaleur sont disposés l'un derrière l'autre dans le sens de circulation du flux d'air.

Selon l'un des aspects de l'invention, le guide d'air amont et/ ou le guide d'air aval sont formées sur deux pièces différentes, notamment assemblées entre elles, par exemple avec des vis, ces pièces étant notamment réalisées en matière plastique.

Selon l'un des aspects de l'invention, la pièce sur laquelle est formé le guide d'ait aval est agencée pour définir au moins un canal de sortie dans lequel le flux d'air circulant dans le guide d'air aval vient se jeter.

Selon l'un des aspects de l'invention, le canal de sorite présente une forme en Y de manière à présenter deux ouvertures de sortie d'air.

Selon l'un des aspects de l'invention, le guide d'air aval présente une cloison commune avec le canal de sortie.

Selon l'un des aspects de l'invention, le guide d'air aval communique avec le canal de sortie par un coude de sorte que le flux d'air qui traverse ce coude puisse faire un angle supérieur à 90°, notamment supérieur à 120°.

Selon l'un des aspects de l'invention, le ventilateur tangentiel est disposé à la sortie du guide d'air aval.

Selon l'un des aspects de l'invention, le ventilateur tangentiel est disposé dans le coude qui relie le guide d'air aval au canal de sortie.

Selon l'un des aspects de l'invention, le ventilateur tangentiel est disposé à une ouverture de sortie du canal de sortie qui présente notamment une forme en Y.

Selon l'un des aspects de l'invention, deux ventilateurs tangentiels sont disposés dans le canal de sortie, chaque ventilateur étant à une ouverture du canal de sortie qui présente une forme en Y.

Selon l'un des aspects de l'invention, les ouvertures de sortie du Y donnent en bas de caisse du véhicule.

Selon l'un des aspects de l'invention, le dispositif de ventilation comprend, en plus du ou des ventilateurs tangentiels disposés en aval du ou des échangeurs de chaleur, un ventilateur tangentiel disposé en amont de ce ou de ces échangeurs de chaleur.

Selon l'un des aspects de l'invention, ce ventilateur amont est disposé à l'entrée du guide d'air amont.

Selon l'un des aspects de l'invention, le logement pour échangeur de chaleur est agencé de sorte que lorsque le dispositif de ventilation est monté sur le véhicule, le logement soit incliné de sorte que le ou les échangeurs de chaleur reçus dans ce logement soit ou soient inclinés, cette inclinaison étant notamment comprise entre 0 et 90° par rapport à l'horizontal, les angles de 0° et 90° étant exclus. Cette inclinaison est notamment comprise entre 10° et 80°, par exemple entre 40° et 50°.

Selon l'un des aspects de l'invention, le dispositif de ventilation comporte 1, 2 ou 3 ventilateurs tangentiels.

Selon l'un des aspects de l'invention, lorsqu'il est prévu au moins deux ventilateurs tangentiels, ces ventilateurs peuvent être identiques ou différents, notamment diamètres différents.

L'invention a encore pour objet un module d'échange thermique de véhicule automobile comprenant au moins :
- un premier échangeur de chaleur comportant au moins un premier étage et un deuxième étage, ledit premier échangeur de chaleur étant configuré de sorte que le premier étage et le deuxième étage sont en liaison fluidique au sein d'un même circuit de refroidissement du véhicule automobile ;
- un dispositif de ventilation comprenant au moins un ventilateur tangentiel de mise en mouvement d'un flux d'air destiné à traverser au moins le premier échangeur de chaleur,
et dans lequel les premier et deuxième étages du premier échangeur de chaleur sont disposés en vis-à-vis, l'un derrière l'autre par rapport au sens d'écoulement du flux d'air, de sorte que l'air mis en mouvement par le ventilateur tangentiel traverse successivement le premier étage puis le deuxième étage du premier échangeur de chaleur.

Un ventilateur tangentiel possède des coefficients de pression plus élevés qu'un ventilateur axial. Ceci permet de mettre en mouvement un flux d'air dont le coefficient de pression est apte à traverser plusieurs surfaces d'échange thermique successives. Ici, chacun des étages du premier échangeur de chaleur peut ainsi être traversé par le flux d'air mis en mouvement par le ventilateur tangentiel. Le module d'échange thermique proposé est alors très compact grâce :
- aux dimensions réduites du ventilateur tangentiel par rapport à un ventilateur axial classique, et
- au gain en encombrement, notamment en hauteur, obtenu grâce aux premier et deuxième étages disposés en vis-à-vis et l'un derrière l'autre dans le module d'échange de chaleur, comparé à un échangeur mono-étage associé à un ventilateur axial classique.

Cette compacité ne nuit pas pour autant aux performances de refroidissement du module d'échange thermique puisque la surface d'échange de chaleur peut être identique à un échangeur classique mono-étage. Au contraire, les performances de refroidissement peuvent être améliorées grâce aux coefficients de pression du ventilateur tangentiel plus élevés qu'un ventilateur axial.

Cette compacité du module d'échange thermique proposé permet une intégration plus aisée au sein du véhicule automobile, en particulier lorsque celui-ci est électrique. En effet, l'ouverture des calandres des véhicules électriques pour le passage d'air n'occupe en général pas plus de la moitié de ces dernières, ce qui rend difficile d'assurer une distribution d'air homogène sur les échangeurs de chaleur à l'intérieur du véhicule électrique si le module d'échange thermique n'est pas compact, difficulté que l'on rencontre avec l'utilisation de ventilateurs axiaux classiques par exemple.

Avec le module d'échange thermique proposé, la forme de l'échangeur et notamment de ses étages peut être adaptée aux nouvelles formes de calandre de véhicule électrique.

Selon l'un des aspects de l'invention, les deux étages comportent des faces en vis-à-vis qui sont traversées par le flux d'air lors du fonctionnement du ventilateur tangentiel.

Selon l'un des aspects de l'invention, les deux étages sont en contact l'un avec l'autre par leurs faces en vis-à-vis.

En variante, les deux étages sont disposés de sorte à ménager, entre leurs faces en vis-à-vis, un espacement non nul. Autrement dit les deux étages ne sont pas accolés l'un à l'autre.

Selon l'un des aspects de l'invention, les deux étages sont disposés avec un espacement entre eux qui est plus petit que 2 fois l'épaisseur de chaque étage, notamment plus petit que l'épaisseur de chaque étage, notamment plus petit que la moitié de l'épaisseur de chaque étage, notamment plus petit que 1/5 ou 1/10 de l'épaisseur de chaque étage.

Selon un autre aspect de l'invention, le premier étage et le deuxième étage du premier échangeur de chaleur sont reliés l'un à l'autre par au moins un raccord de fluide permettant au fluide caloporteur de circuler en série d'un étage à l'autre du premier échangeur de chaleur.

Selon une autre réalisation, le premier étage et le deuxième étage du premier échangeur de chaleur sont respectivement reliés audit circuit de refroidissement par l'intermédiaire de raccords de fluide permettant au fluide caloporteur de circuler en parallèle dans le premier étage et le deuxième étage au sein du circuit de refroidissement.

Selon l'invention :
- le premier étage comprend un premier faisceau de conduits d'échange de chaleur,
- le deuxième étage comprend un deuxième faisceau de conduits d'échange de chaleur,
et dans lequel ledit premier échangeur de chaleur comprend une première boite collectrice commune placée à une première extrémité des premier et deuxième faisceaux de conduits d'échange de chaleur.

Selon un mode de réalisation, ledit premier échangeur de chaleur comprend en outre une deuxième boite collectrice commune placée à une deuxième extrémité des premier et deuxième faisceaux de conduits d'échange de chaleur, opposée à ladite première extrémité.

Avantageusement, les premier et deuxième étages présentent une même superficie d'échange de chaleur, formant par exemple des étages de dimensions identiques.

Selon un aspect de l'invention, les premier et deuxième étages sont orientés parallèlement l'un par rapport à l'autre.

Selon un mode de réalisation de l'invention, les premier et deuxième étages sont orientés perpendiculairement par rapport à la direction d'écoulement du flux d'air au sein du module d'échange thermique.

Avantageusement, les premier et deuxième étages forment un unique échangeur de chaleur choisi parmi un condenseur ou un radiateur basse température.

Selon un mode de réalisation de l'invention, le dispositif de ventilation est disposé en amont du premier échangeur de chaleur par rapport au sens d'écoulement du flux d'air, le ventilateur tangentiel étant configuré pour souffler le flux d'air au travers dudit premier échangeur de chaleur.

Selon un autre mode de réalisation de l'invention, le dispositif de ventilation est disposé en aval du premier échangeur de chaleur par rapport au sens d'écoulement du flux d'air, le ventilateur tangentiel étant configuré pour aspirer le flux d'air au travers dudit premier échangeur de chaleur.

Avantageusement, l'un des premier et deuxième étages, dit étage avant, est disposé entre une ouverture de face avant du véhicule automobile et l'autre étage.

Préférentiellement, ledit étage avant est disposé en vis-à-vis de l'ouverture de face avant du véhicule automobile.

Selon un mode de réalisation, le module d'échange thermique comporte en outre au moins un deuxième échangeur de chaleur, l'au moins un ventilateur tangentiel étant configuré pour mettre en mouvement le flux d'air à travers au moins le premier échangeur de chaleur et le deuxième échangeur de chaleur.

Avantageusement, les premier et deuxième échangeurs de chaleur sont disposés en vis-à-vis, l'un derrière l'autre par rapport au sens d'écoulement du flux d'air, de sorte que l'air mis en mouvement par le ventilateur tangentiel traverse successivement le premier échangeur de chaleur puis le deuxième échangeur de chaleur.

Avantageusement, les premier et deuxième échangeurs de chaleur sont respectivement destinés à être en liaison fluidique avec des circuits de refroidissement distincts dans le véhicule automobile, comme typiquement le circuit de climatisation d'une part et un circuit de refroidissement moteur ou batterie du véhicule d'autre part.

Selon un mode de réalisation, le deuxième échangeur de chaleur comprend un unique étage d'échange de chaleur.

Selon un autre mode de réalisation, le deuxième échangeur de chaleur comprend au moins un premier étage et un deuxième étage, ledit deuxième échangeur de chaleur étant configuré de sorte que le premier étage et le deuxième étage sont en liaison fluidique au sein d'un même circuit de refroidissement du véhicule automobile.

Avantageusement, les premier et deuxième échangeurs de chaleur présentent une même superficie d'échange de chaleur, formant par exemple des échangeurs de chaleur de dimensions similaires.

Selon un aspect de l'invention, le module d'échange thermique comprend un carénage définissant un logement agencé pour recevoir au moins ledit premier échangeur et le ventilateur tangentiel de sorte que, en fonctionnement du ventilateur, l'air mis en mouvement par le ventilateur est au moins partiellement guidé par le carénage et traverse le premier échangeur de chaleur.

D'autres caractéristiques et avantages de l'invention apparaîtront à la lecture de la description qui va suivre. Celle-ci est purement illustrative et doit être lue en regard des dessins annexés sur lesquels :
- les figures 1 à 3 illustrent, en coupe, un module d'échange de chaleur équipé d'un dispositif de ventilation selon différents modes de réalisation de l'invention ;
- la figure 4 représente une vue en perspective d'une face avant de véhicule automobile comprenant un exemple de réalisation du module d'échange thermique selon l'invention ;
- la figure 5 représente une vue en coupe de l'exemple de réalisation du module d'échange thermique de la figure 4 ;
- les figures 6A à 6F représentent des vues schématiques de plusieurs exemples de réalisation du module d'échange thermique, et
- les figures 7A et 7B représentent des vues schématiques de plusieurs exemples de réalisation du module d'échange thermique avec deux échangeurs de chaleur.

Sur les différentes figures, les éléments identiques ou similaires, ayant une fonction identique ou analogue, portent les mêmes références. La description de leur structure et de leur fonction n'est donc pas systématiquement reprise.

L'invention a pour objet un dispositif de ventilation 1 pour véhicule automobile.

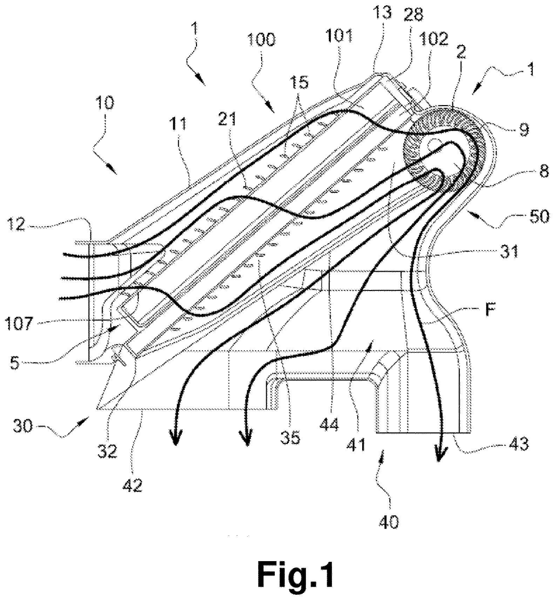

L'invention a également pour objet un module d'échange thermique 100, comprenant le dispositif de ventilation 1 et deux échangeurs thermiques 101 et 102 placés l'un derrière l'autre, comme illustré sur la figure 1.

Les échangeurs 101 et 102 sont par exemple un radiateur basse température et un condenseur de boucle de climatisation.

Le dispositif de ventilation 1 comprend :
- un ventilateur tangentiel 2de mise en mouvement d'un flux d'air F traversant les échangeurs de chaleur 101 et 102,
- un logement 5 agencé pour recevoir les échangeurs de chaleur 101 et 102, le logement 5 étant placé en amont du ventilateur tangentiel 2 de sorte que, en fonctionnement du ventilateur 2, de l'air soir aspiré par le ventilateur 2 et cet air aspiré traverse d'abord le logement 5 pour échangeur de chaleur avant de passer dans le ventilateur tangentiel 2,
- un répartiteur amont 10 de l'air aspiré, répartiteur amont agencé pour répartir l'air aspiré avant que cet air ne traverse le logement 5 pour échangeurs de chaleur.

Le ventilateur 2 est équipé d'un rotor 8 en forme de tambour, qui comprend, à la circonférence des pales incurvées 9.

Le répartiteur amont 10 comprend un guide d'air amont 11 ayant une forme de convergent, à savoir la section transversale de ce guide d'air diminue au fur et à mesure que l'on s'éloigne de l'entrée 12 de ce guide.

Ce guide d'air amont 11 présente une forme courbe, notamment non droite sur toute sa longueur. Par exemple cette forme du convergent peut être sensiblement, au moins sur une portion de sa longueur, parabolique ou hyperbolique.

Ce guide d'air amont 11 comporte une entrée d'air 12 et est agencé de manière à ce que son extrémité opposée 13 à l'entrée d'air 12 est agencée de manière à être sensiblement adjacent à l'échangeur de chaleur 101 qui placé dans le logement 5.

Le guide d'air 11 est agencé en regard de sensiblement toute la surface de l'échangeur de chaleur 101 placé dans le logement.

Le répartiteur 10 comporte, outre le guide d'air 11, des déflecteurs 15 agencés dans le guide d'air amont 11 et agencé pour orienter le flux d'air F vers le logement 5 des échangeurs de chaleur 101 et 102.

Le répartiteur 10 comporte une pluralité de déflecteurs amont 15 disposés en une rangée ou plusieurs rangées, cette ou ces rangées étant notamment sensiblement parallèles à une surface 107 de l'échangeur de chaleur 101.

Les déflecteurs 15 de la rangée sont tous identiques.

Selon l'un des aspects de l'invention, les déflecteurs amont sont disposés à moins de 5 cm, notamment moins de 2 cm ou moins de 1 cm de l'échangeur de chaleur.

Selon l'un des aspects de l'invention, chaque déflecteur 15 comporte une ailette 21, notamment ayant une forme de courbe.

Chaque ailette 21 comporte un rebord courbé 22 en direction du logement 5.

Le guide d'air amont 10 comporte une paroi commune 28 avec le logement pour échangeur de chaleur, cette paroi commune 28 étant notamment une paroi d'extrémité du logement 5.

Le dispositif de ventilation 2 comporte un guide d'air aval 30 agencé en aval des échangeurs de chaleur 101 et 102 disposés dans le logement 5.

Ce guide d'air 30 présente une forme de divergent, à savoir la section transversale de ce guide d'air augmente au fur et à mesure que l'on se rapproche de la sortie 31 de ce guide aval.

Ce guide d'air aval 30 présente une forme courbe, notamment non droite sur toute sa longueur. Par exemple cette forme du divergent peut être sensiblement, au moins sur une portion de sa longueur, parabolique ou hyperbolique.

Ce guide d'air aval 30 comporte une sortie d'air 31 et est agencé de manière à ce que son extrémité opposée 32 à la sortie d'air 31 est agencée de manière à être sensiblement adjacent à l'échangeur de chaleur qui est destiné à être placé dans le logement.

Le guide d'air aval 30 est agencé en regard de sensiblement toute la surface de l'échangeur de chaleur 102 placé dans le logement 5.

Le dispositif 1 comporte plusieurs déflecteurs aval 35 agencés pour orienter le flux d'air sortant du logement 5 vers la sortie 31 du guide d'air aval.

Les déflecteurs aval 35 de la rangée sont tous identiques.

Selon l'un des aspects de l'invention, les déflecteurs aval sont disposés à moins de 5 cm, notamment moins de 2 cm ou moins de 1cm de l'échangeur de chaleur.

Chaque déflecteur aval 35 comporte une ailette, notamment ayant une forme de courbe.

Chaque ailette aval 35 comporte un rebord courbé en direction du logement pour échangeur de chaleur.

Les ailettes amont 15 et/ou aval 35 sont présentes sur sensiblement toute l'étendue du ou des échangeurs de chaleur.

Les échangeurs de chaleur 101 et 102 sont disposés l'un derrière l'autre dans le sens de circulation du flux d'air.

Le guide d'air amont 10 et le guide d'air aval 30 sont formés sur deux pièces différentes, notamment assemblées entre elles, par exemple avec des vis, ces pièces étant notamment réalisées en matière plastique.

La pièce 40 sur laquelle est formé le guide d'ait aval 30 est agencée pour définir au moins un canal de sortie 41 dans lequel le flux d'air F circulant dans le guide d'air aval F vient se jeter.

Le canal de sortie 41 présente une forme en Y de manière à présenter deux ouvertures 42 et 43 de sortie d'air.

Le guide d'air aval 30 présente une cloison commune 44 avec le canal de sortie 41.

Le guide d'air aval 30 communique avec le canal de sortie 41 par un coude 50 de sorte que le flux d'air F qui traverse ce coude 50 puisse faire un angle supérieur à 90°, notamment supérieur à 120°.

Le ventilateur tangentiel 2 est disposé à la sortie 31 du guide d'air aval 30.

Le ventilateur tangentiel 2 est disposé dans le coude 50 qui relie le guide d'air aval 30 au canal de sortie 41.

Dans l'exemple de la figure, un seul ventilateur tangentiel 2 est prévu.

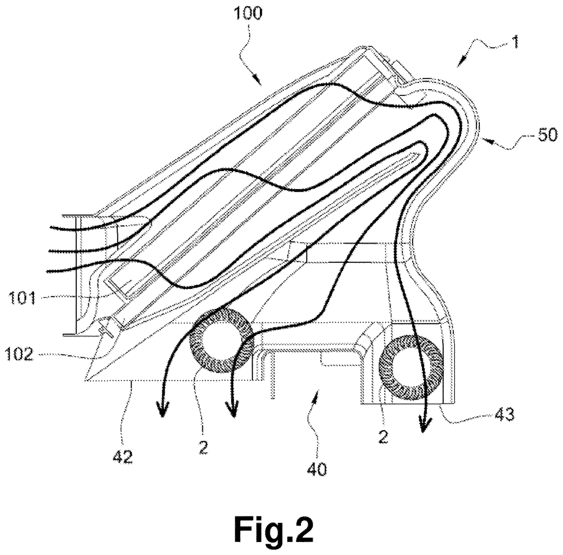

En variante, comme illustré à la figure 2, deux ventilateurs tangentiels 2 sont disposés dans le canal de sortie, chaque ventilateur 2 étant à une ouverture 42, 43 du canal de sortie 41 qui présente une forme en Y.

Ces ouvertures de sortie 42 et 43 du Y donnent en bas de caisse du véhicule.

Dans l'exemple de la figure 2, deux ventilateurs 2 sont prévus. Aucun n'est disposé dans le coude 50.

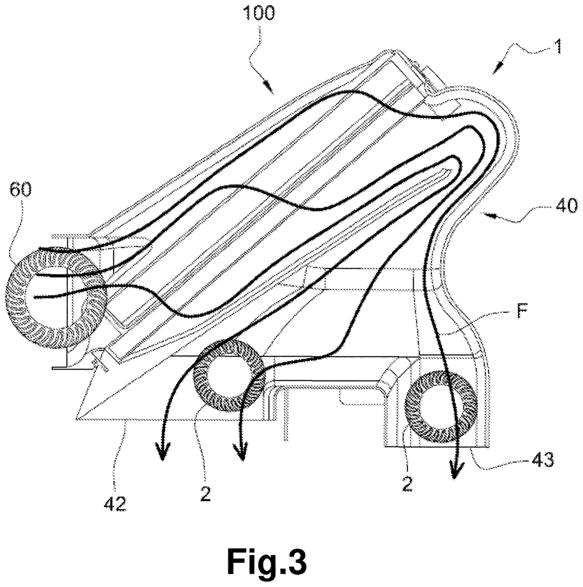

Comme illustré sur la figure 3, le dispositif de ventilation 1 comprend, en plus des ventilateurs tangentiels 2 disposés en aval des échangeurs de chaleur, un ventilateur tangentiel 60 disposé en amont de ces échangeurs de chaleur.

Ce ventilateur amont 60 est disposé à l'entrée 12 du guide d'air amont 10.

Selon l'un des aspects de l'invention, le logement 5 pour échangeur de chaleur est agencé de sorte que lorsque le dispositif de ventilation est monté sur le véhicule, le logement 5 soit incliné de sorte que les échangeurs de chaleur 101 et 102 reçus dans ce logement 5 soient inclinés, cette inclinaison étant notamment comprise entre 0 et 90° par rapport à l'horizontal, les angles de 0° et 90° étant exclus. Cette inclinaison est notamment comprise entre 10° et 80°, par exemple entre 40° et 50°.

Les ailettes peuvent être formées sur une pièce dédiée ou, en variante, être formées avec le guide d'air associé.

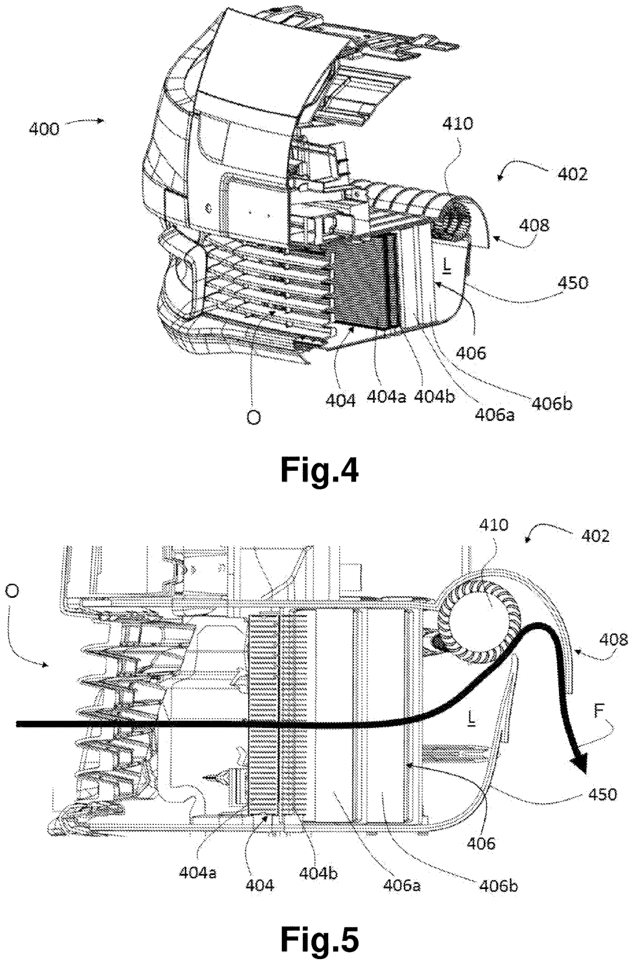

On se réfère maintenant aux figures 4 et 5 sur lesquelles une face avant 400 de véhicule est illustrée. Cet exemple de réalisation présente une face avant 400 de véhicule électrique, munie d'au moins une ouverture O de calandre de sorte que de l'air extérieur puisse pénétrer vers l'intérieur du véhicule. Cette face avant 400 est munie d'un module d'échange thermique 402 qui comprend :
- un premier échangeur de chaleur 404 comportant au moins un premier étage 404a et un deuxième étage 404b, le premier échangeur de chaleur étant configuré de sorte que le premier étage 404a et le deuxième étage 404b sont en liaison fluidique au sein d'un même circuit de refroidissement du véhicule automobile ;
- un dispositif de ventilation 408 comprenant au moins un ventilateur tangentiel 410 de mise en mouvement d'un flux d'air F destiné à traverser au moins le premier échangeur de chaleur 404.

Le premier étage 404a et le deuxième étage 404b du premier échangeur de chaleur 404 sont disposés en vis-à-vis, l'un derrière l'autre par rapport au sens d'écoulement du flux d'air F, de sorte que l'air mis en mouvement par le ventilateur tangentiel 410 traverse successivement le premier étage 404a puis le deuxième étage 404b du premier échangeur de chaleur 404.

L'utilisation du ventilateur tangentiel 410 pour alimenter successivement au moins deux étages 404a, 404b d'un même échangeur 404 permet de gagner en encombrement, notamment en hauteur par rapport à un module d'échange thermique embarquant un échangeur de chaleur mono-étage alimenté par un ventilateur axial.

Dans un premier mode de réalisation, les deux étages 404a et 404b peuvent être en contact l'un avec l'autre par leurs faces en vis-à-vis.

Dans un deuxième mode de réalisation, les deux étages 404a et 404b sont disposés de sorte à ménager, entre leurs faces en vis-à-vis, un espacement non nul. Autrement dit les deux étages ne sont pas accolés l'un à l'autre. Plus particulièrement, les deux étages 404a et 404b sont disposés avec un espacement entre eux qui est plus petit que 2 fois l'épaisseur de chaque étage, notamment plus petit que l'épaisseur de chaque étage, notamment plus petit que la moitié de l'épaisseur de chaque étage, notamment plus petit que 1/5 ou 1/10 de l'épaisseur de chaque étage.

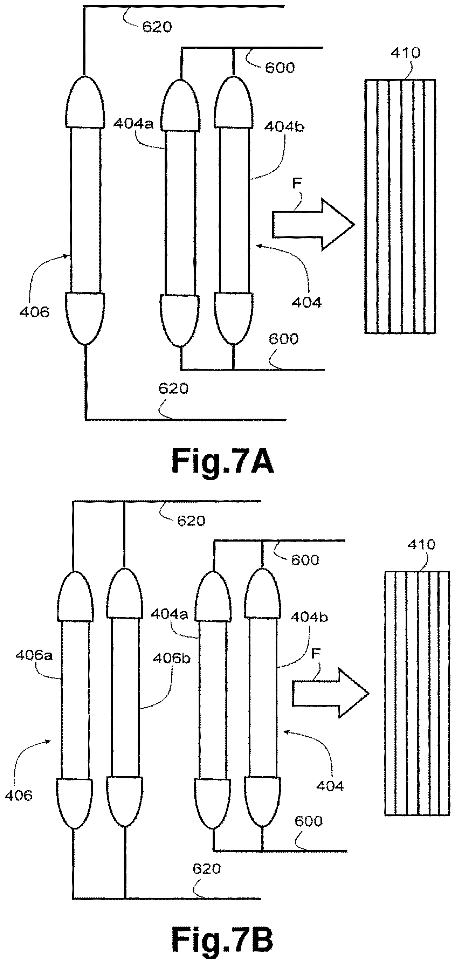

En outre, le dispositif de ventilation 408 peut être configuré de sorte à alimenter en air un deuxième échangeur de chaleur 406 qui peut être mono-étage ou présenter également au moins deux étages 406a et 406b, comme décrit ci-après en référence aux figures 7A et 7B.

Le module d'échange thermique 402 peut comprendre en outre un carénage 450 définissant un logement L agencé pour recevoir au moins le premier échangeur 404 et le ventilateur tangentiel 410 de sorte que, en fonctionnement du ventilateur, l'air mis en mouvement par le ventilateur est au moins partiellement guidé par le carénage et traverse le premier échangeur de chaleur.

Le carénage peut en outre être conformé pour recevoir le deuxième échangeur 406 et/ou un ou plusieurs ventilateurs tangentiels supplémentaires.

Parmi l'un des premier et deuxième étages 404a, 404b, l'un d'entre eux dit étage avant, peut être disposé entre l'ouverture O de face avant du véhicule automobile et l'autre étage.

L'étage avant pourra notamment être disposé en vis-à-vis de l'ouverture O de face avant du véhicule automobile.

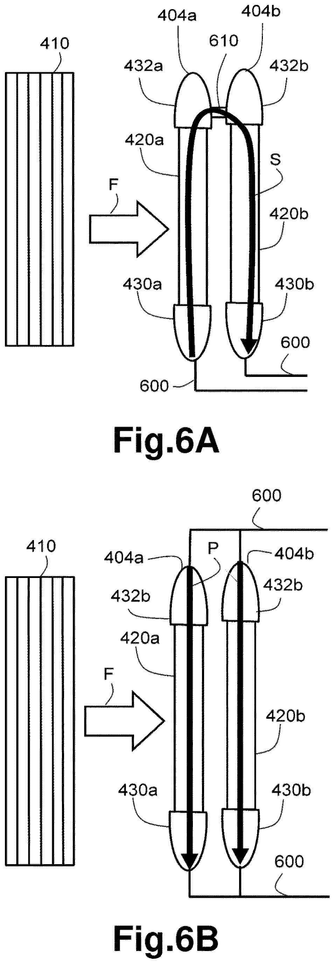

Aux figures 6A à 6F sont représentés schématiquement différentes réalisations possibles du module d'échange thermique 402.

A la figure 6A par exemple, le premier étage 404a et le deuxième étage 404b du premier échangeur de chaleur 404 sont reliés fluidiquement l'un à l'autre par au moins un raccord de fluide 610 permettant au fluide caloporteur de circuler en série d'un étage à l'autre du premier échangeur de chaleur 404 (sens d'écoulement du fluide caloporteur au sein du premier échangeur 404 selon la flèche S).

Chaque étage des échangeurs de chaleur 404 et 406 peut comprendre au moins un faisceau de conduits d'échange de chaleur qui peut par exemple être formé par des tubes ou plaques, dans lesquels le fluide caloporteur est destiné à circuler, notamment un liquide tel que l'eau, coopérant avec des éléments d'échange de chaleur tels que des intercalaires ou ailettes. Les intercalaires ou ailettes permettent d'augmenter la surface d'échange entre les tubes et l'air ambiant.

Typiquement, le premier étage 404a comprend un faisceau de tubes 420a en liaison fluidique avec une première boite collectrice 430a disposée à une première extrémité du faisceau 420a, et à une deuxième boite collectrice 432a disposée à une deuxième extrémité, opposée à ladite première extrémité. Le deuxième étage 404b comprend par exemple un faisceau de tubes 420b en liaison fluidique avec une première boite collectrice 430b à une première extrémité du faisceau 420b, et à une deuxième boite collectrice 432b à une deuxième extrémité, opposée à ladite première extrémité.

Le raccord de fluide 610 peut notamment être configuré pour établir une liaison fluidique entre une boite collectrice 430a, 432a du premier étage 404a avec une boite collectrice 430a, 432b du deuxième étage 404b.

Il convient de noter que le premier étage 404a et le deuxième étage 404b sont en liaison fluidique au sein d'un même circuit de refroidissement 600 du véhicule automobile.

A la figure 6B, le premier étage 404a et le deuxième étage 404b du premier échangeur de chaleur 404 sont respectivement reliés au circuit de refroidissement 600 par l'intermédiaire de raccords de fluide permettant au fluide caloporteur de circuler en parallèle dans le premier étage 404a et le deuxième étage 404b au sein de dudit circuit de refroidissement 600 (sens d'écoulement du fluide caloporteur au sein du premier échangeur 404 selon la flèche P)..

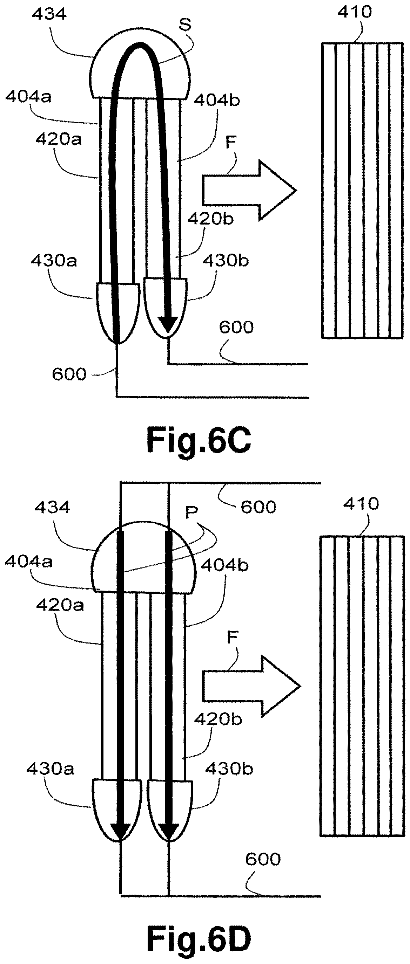

Les figures 6C et 6D correspondent respectivement aux figures 6A et 6B dans une variante de réalisation pour laquelle le premier échangeur de chaleur 404 comprend une première boite collectrice 434 commune placée à une première extrémité des premier et deuxième faisceaux de conduits d'échange de chaleur 420a, 420b.

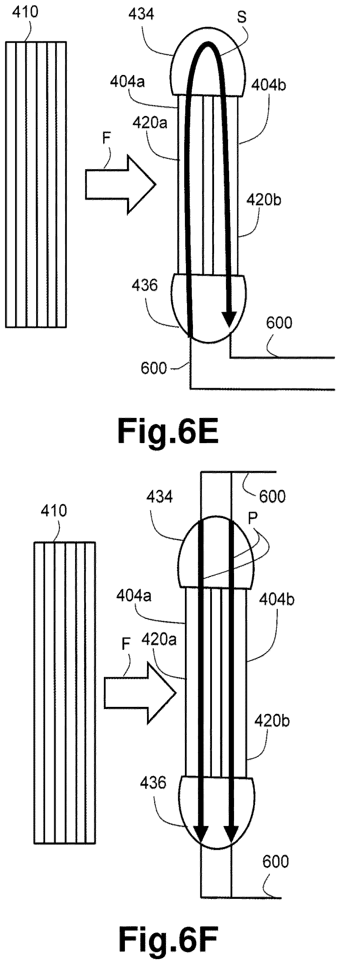

Les figures 6E et 6F correspondent respectivement aux figures 6C et 6D dans une variante de réalisation pour laquelle le premier échangeur de chaleur 404 comprend en outre une deuxième boite collectrice 436 commune placée à une deuxième extrémité des premier et deuxième faisceaux de conduits d'échange de chaleur 420a, 420b, opposée à ladite première extrémité.

Dans les exemples de réalisation illustrés, les premier et deuxième étages 404a, 404b présentent une même superficie d'échange de chaleur, formant par exemple des étages de dimensions identiques. Néanmoins, selon d'autres variantes de réalisation possible, chaque étage peut avoir ses propres dimensions, par exemple pour répondre à des besoins en refroidissement spécifique ou à des contraintes d'intégration et d'encombrement dans le véhicule.

Les premier et deuxième étages 404a, 404b peuvent notamment être orientés parallèlement l'un par rapport à l'autre. Ils peuvent en outre être orientés perpendiculairement par rapport à la direction d'écoulement du flux d'air F au sein du module d'échange thermique 402.

Les premier et deuxième étages 404a, 404b forment un unique échangeur de chaleur 404 choisi de préférence parmi un condenseur ou un radiateur basse température. Dans le cas d'un condenseur, l'échangeur 404 est destiné à être mis en liaison fluidique avec le circuit de climatisation par exemple, et dans le cas d'un échangeur de chaleur basse température, l'échangeur 404 est destiné à être mis en liaison fluidique avec un circuit de refroidissement du véhicule, par exemple celui de la batterie lorsque celui-ci le véhicule est électrique par exemple.

Aux figures 6A, 6B, 6E, 6F, le dispositif de ventilation 408 est disposé en amont du premier échangeur de chaleur 404 par rapport au sens d'écoulement du flux d'air F, le ventilateur tangentiel 410 étant alors configuré pour souffler le flux d'air F au travers dudit premier échangeur de chaleur 404.

Selon une autre réalisation possible, telle qu'illustrée aux figures 6C et 6D, le dispositif de ventilation 408 est disposé en aval du premier échangeur de chaleur 404 par rapport au sens d'écoulement du flux d'air F, le ventilateur tangentiel 410 étant alors configuré pour aspirer le flux d'air au travers dudit premier échangeur de chaleur 404.

On se réfère maintenant aux figures 7A et 7B. Dans cet exemple de réalisation, le module d'échange thermique comprend au moins un deuxième échangeur de chaleur 406, l'au moins un ventilateur tangentiel 410 étant configuré pour mettre en mouvement le flux d'air F à travers au moins le premier échangeur de chaleur 404 et le deuxième échangeur de chaleur 406.

Les premier 404 et deuxième 406 échangeurs de chaleur peuvent notamment être disposés en vis-à-vis, l'un derrière l'autre par rapport au sens d'écoulement du flux d'air F, de sorte que l'air mis en mouvement par le ventilateur tangentiel 410 traverse successivement le premier échangeur de chaleur 404 puis le deuxième échangeur de chaleur 406.

Les premier 404 et deuxième 406 échangeurs de chaleur sont respectivement destinés à être mis en liaison fluidique avec des circuits de refroidissement distincts 600, 620 dans le véhicule automobile. Typiquement, lorsque le premier échangeur 404 est un condenseur, l'échangeur 404 est destiné à être mis en liaison fluidique avec le circuit 600 de climatisation par exemple, et lorsque le deuxième échangeur 406 est un radiateur basse température, l'échangeur 406 est destiné à être mis en liaison fluidique avec le circuit 620 de refroidissement de la batterie du véhicule lorsque celui-ci est électrique par exemple.

Dans l'exemple illustré à la figure 7A, le deuxième échangeur de chaleur 406 comprend un unique étage d'échange de chaleur.

Dans l'exemple illustré à la figure 7B, le deuxième échangeur de chaleur 406 comprend au moins un premier étage 406a et un deuxième étage 406b, ledit deuxième échangeur de chaleur 406 étant configuré de sorte que le premier étage 406a et le deuxième étage 406b sont en liaison fluidique au sein d'un même circuit de refroidissement 620 du véhicule automobile.

Dans les exemples de réalisation illustrés, les premier et deuxième échangeurs de chaleur 404, 406 présentent une même superficie d'échange de chaleur, formant par exemple des échangeurs de chaleur de dimensions similaires. Néanmoins, selon d'autres variantes de réalisation possibles, chaque échangeur peut avoir ses propres dimensions, par exemple pour répondre à des besoins en refroidissement spécifiques ou à des contraintes d'intégration et d'encombrement.

L'invention n'est pas limitée aux exemples de réalisation présentés et d'autres modes de réalisation apparaîtront clairement à l'homme du métier. Notamment, les différents exemples peuvent être combinés, tant qu'ils ne sont pas contradictoires.

## Revendications

1. Module d'échange thermique (402) de véhicule automobile, comprenant au moins :
- un premier échangeur de chaleur (404) comportant au moins un premier étage (404a) et un deuxième étage (404b), ledit premier échangeur de chaleur étant configuré de sorte que le premier étage (404a) et le deuxième étage (404b) sont en liaison fluidique au sein d'un même circuit de refroidissement (600) du véhicule automobile ;
- un dispositif de ventilation (408) comprenant au moins un ventilateur tangentiel (410) de mise en mouvement d'un flux d'air (F) destiné à traverser au moins le premier échangeur de chaleur (404),
- et dans lequel les premier (404a) et deuxième (404b) étages du premier échangeur de chaleur (404) sont disposés en vis-à-vis, l'un derrière l'autre par rapport au sens d'écoulement du flux d'air (F), de sorte que l'air mis en mouvement par le ventilateur tangentiel (410) traverse successivement le premier étage (404a) puis le deuxième étage (404b) du premier échangeur de chaleur (404), **caractérisé en ce que**
- le premier étage (404a) comprend un premier faisceau de conduits d'échange de chaleur (420a),
- le deuxième étage (404b) comprend un deuxième faisceau de conduits d'échange de chaleur (420b),
et **en ce que** ledit premier échangeur de chaleur (404) comprend une première boite collectrice (434) commune placée à une première extrémité des premier et deuxième faisceaux de conduits d'échange de chaleur (420a,420b).

2. Module d'échange thermique (402) selon la revendication précédente, dans lequel le premier étage (404a) et le deuxième étage (404b) du premier échangeur de chaleur (404) sont reliés l'un à l'autre par au moins un raccord de fluide (610) permettant au fluide caloporteur de circuler en série d'un étage à l'autre du premier échangeur de chaleur (404).

3. Module d'échange thermique (402) selon la revendication 1, dans lequel le premier étage (404a) et le deuxième étage (404b) du premier échangeur de chaleur (404) sont respectivement reliés audit circuit de refroidissement (600) par l'intermédiaire de raccords de fluide permettant au fluide caloporteur de circuler en parallèle dans le premier étage (404a) et le deuxième étage (404b) au sein de dudit circuit de refroidissement (600).

4. Module d'échange thermique (402) selon l'une des revendications précédentes, dans lequel ledit premier échangeur de chaleur (404) comprend une deuxième boite collectrice (436) commune placée à une deuxième extrémité des premier et deuxième faisceaux de conduits d'échange de chaleur (420a,420b), opposée à ladite première extrémité.

5. Module d'échange thermique (402) selon l'une quelconque des revendications précédentes, dans lequel les premier et deuxième étages (404a,404b) présentent une même superficie d'échange de chaleur, formant par exemple des étages de dimensions identiques.

6. Module d'échange thermique (402) selon l'une quelconque des revendications précédentes, dans lequel les premier et deuxième étages (404a,404b) sont orientés parallèlement l'un par rapport à l'autre.

7. Module d'échange thermique (402) selon la revendication précédente, dans lequel les premier et deuxième étages (404a,404b) sont orientés perpendiculairement par rapport à la direction d'écoulement du flux d'air (F) au sein du module d'échange thermique (402).

8. Module d'échange thermique (402) selon l'une quelconque des revendications précédentes, dans lequel les premier et deuxième étages (404a,404b) forment un unique échangeur de chaleur (404) choisi parmi un condenseur ou un radiateur basse température.

9. Module d'échange thermique (402) selon l'une quelconque des revendications précédentes, dans lequel le dispositif de ventilation (408) est disposé en amont du premier échangeur de chaleur (404) par rapport au sens d'écoulement du flux d'air (F), le ventilateur tangentiel (410) étant configuré pour souffler le flux d'air (F) au travers dudit premier échangeur de chaleur (404).

10. Module d'échange thermique (402) selon l'une quelconque des revendications 1 à 10, dans lequel le dispositif de ventilation (408) est disposé en aval du premier échangeur de chaleur (404) par rapport au sens d'écoulement du flux d'air (F), le ventilateur tangentiel (410) étant configuré pour aspirer le flux d'air au travers dudit premier échangeur de chaleur (404).

11. Module d'échange thermique (402) selon l'une quelconque des revendications précédentes, dans lequel l'un des premier et deuxième étages (404a,404b), dit étage avant, est disposé entre une ouverture (O) de face avant du véhicule automobile et l'autre étage.

12. Module d'échange thermique (402) selon la revendication précédente, dans lequel ledit étage avant est disposé en vis-à-vis de l'ouverture (O) de face avant du véhicule automobile.

13. Module d'échange thermique (402) selon l'une des revendications précédentes, comportant en outre au moins un deuxième échangeur de chaleur (406), l'au moins un ventilateur tangentiel (410) étant configuré pour mettre en mouvement le flux d'air (F) à travers au moins le premier échangeur de chaleur (404) et le deuxième échangeur de chaleur (406),

14. Module d'échange thermique (402) selon la revendication précédente, dans lequel les premier (404) et deuxième (406) échangeurs de chaleur sont disposés en vis-à-vis, l'un derrière l'autre par rapport au sens d'écoulement du flux d'air (F), de sorte que l'air mis en mouvement par le ventilateur tangentiel (410) traverse successivement le premier échangeur de chaleur (404) puis le deuxième échangeur de chaleur (406).

15. Module d'échange thermique (402) selon l'une quelconque des revendications 13 ou 14, dans lequel les premier (404) et deuxième (406) échangeurs de chaleur sont respectivement destinés à être mis en liaison fluidique avec des circuits de refroidissement distincts dans le véhicule automobile.

16. Module d'échange thermique (402) selon l'une quelconque des revendications 13 à 15, dans lequel le deuxième échangeur de chaleur (406) comprend un unique étage d'échange de chaleur.

17. Module d'échange thermique (402) selon l'une quelconque des revendications 13 à 15, dans lequel le deuxième échangeur de chaleur (406) comprend au moins un premier étage (406a) et un deuxième étage (406b), ledit deuxième échangeur de chaleur (406) étant configuré de sorte que le premier étage (406a) et le deuxième étage (406b) sont en liaison fluidique au sein d'un même circuit de refroidissement (600) du véhicule automobile.

18. Module d'échange thermique (402) selon l'une quelconque des revendications 13 à 17, dans lequel les premier et deuxième échangeurs de chaleur (404,406) présentent une même superficie d'échange de chaleur, formant par exemple des échangeurs de chaleur de dimensions similaires.

19. Module d'échange thermique selon l'une quelconque des revendications précédentes, comprenant un carénage (450) définissant un logement (L) agencé pour recevoir au moins ledit premier échangeur (404) et le ventilateur tangentiel (410) de sorte que, en fonctionnement du ventilateur, l'air mis en mouvement par le ventilateur est au moins partiellement guidé par le carénage et traverse le premier échangeur de chaleur.

## Patentansprüche

1. Wärmetauschermodul (402) für ein Kraftfahrzeug, mindestens umfassend:
- einen ersten Wärmetauscher (404), der mindestens eine erste Stufe (404a) und eine zweite Stufe (404b) aufweist, wobei der erste Wärmetauscher so ausgebildet ist, dass die erste Stufe (404a) und die zweite Stufe (404b) innerhalb desselben Kühlkreislaufs (600) des Kraftfahrzeugs in Fluidverbindung stehen;
- eine Belüftungsvorrichtung (408), die mindestens einen Querstromlüfter (410) umfasst, um einen Luftstrom (F) in Bewegung zu versetzen, der dazu bestimmt ist, mindestens den ersten Wärmetauscher (404) zu durchqueren;
- und wobei die erste (404a) und die zweite (404b) Stufe des ersten Wärmetauschers (404) gegenüberliegend, bezogen auf die Strömungsrichtung des Luftstroms (F) hintereinander, angeordnet sind, so dass die von dem Querstromlüfter (410) in Bewegung versetzte Luft nacheinander die erste Stufe (404a) und dann die zweite Stufe (404b) des ersten Wärmetauschers (404) durchquert, **dadurch gekennzeichnet, dass**
- die erste Stufe (404a) ein erstes Bündel von Wärmetauscherrohren (420a) umfasst,
- die zweite Stufe (404b) ein zweites Bündel von Wärmetauscherrohren (420b) umfasst,
und dadurch, dass der erste Wärmetauscher (404) einen ersten gemeinsamen Sammelkasten (434) umfasst, der an einem ersten Ende des ersten und des zweiten Bündels von Wärmetauscherrohren (420a, 420b) angeordnet ist.

2. Wärmetauschermodul (402) nach dem vorhergehenden Anspruch, wobei die erste Stufe (404a) und die zweite Stufe (404b) des ersten Wärmetauschers (404) durch mindestens eine Fluidverbindung (610) miteinander verbunden sind, welche ermöglicht, dass das Wärmeträgerfluid in Reihe von einer Stufe des ersten Wärmetauschers (404) zur anderen strömt.

3. Wärmetauschermodul (402) nach Anspruch 1, wobei die erste Stufe (404a) und die zweite Stufe (404b) des ersten Wärmetauschers (404) jeweils mit dem Kühlkreislauf (600) über Fluidverbindungen verbunden sind, welche ermöglichen, dass das Wärmeträgerfluid parallel in der ersten Stufe (404a) und der zweiten Stufe (404b) innerhalb des Kühlkreislaufs (600) strömt.

4. Wärmetauschermodul (402) nach einem der vorhergehenden Ansprüche, wobei der erste Wärmetauscher (404) einen zweiten gemeinsamen Sammelkasten (436) umfasst, der an einem zweiten Ende des ersten und des zweiten Bündels von Wärmetauscherrohren (420a, 420b) angeordnet ist, das dem ersten Ende gegenüberliegt.

5. Wärmetauschermodul (402) nach einem der vorhergehenden Ansprüche, wobei die erste und die zweite Stufe (404a, 404b) dieselbe Wärmeaustauschfläche aufweisen, die zum Beispiel Stufen mit identischen Abmessungen bildet.

6. Wärmetauschermodul (402) nach einem der vorhergehenden Ansprüche, wobei die erste und die zweite Stufe (404a, 404b) parallel zueinander ausgerichtet sind.

7. Wärmetauschermodul (402) nach dem vorhergehenden Anspruch, wobei die erste und die zweite Stufe (404a, 404b) senkrecht bezüglich der Strömungsrichtung des Luftstroms (F) innerhalb des Wärmetauschermoduls (402) ausgerichtet sind.

8. Wärmetauschermodul (402) nach einem der vorhergehenden Ansprüche, wobei die erste und die zweite Stufe (404a, 404b) einen einzigen Wärmetauscher (404) bilden, der aus einem Kondensator und einem Niedertemperaturkühler ausgewählt ist.

9. Wärmetauschermodul (402) nach einem der vorhergehenden Ansprüche, wobei die Belüftungsvorrichtung (408), bezogen auf die Strömungsrichtung des Luftstroms (F), stromaufwärts des ersten Wärmetauschers (404) angeordnet ist, wobei der Querstromlüfter (410) dafür ausgelegt ist, den Luftstrom (F) durch den ersten Wärmetauscher (404) hindurch zu blasen.

10. Wärmetauschermodul (402) nach einem der Ansprüche 1 bis 10, wobei die Belüftungsvorrichtung (408), bezogen auf die Strömungsrichtung des Luftstroms (F), stromabwärts des ersten Wärmetauschers (404) angeordnet ist, wobei der Querstromlüfter (410) dafür ausgelegt ist, den Luftstrom durch den ersten Wärmetauscher (404) hindurch anzusaugen.

11. Wärmetauschermodul (402) nach einem der vorhergehenden Ansprüche, wobei eine von der ersten und zweiten Stufe (404a, 404b), vordere Stufe genannt, zwischen einer Öffnung (O) der Vorderseite des Kraftfahrzeugs und der anderen Stufe angeordnet ist.

12. Wärmetauschermodul (402) nach dem vorhergehenden Anspruch, wobei die vordere Stufe gegenüber der Öffnung (O) der Vorderseite des Kraftfahrzeugs angeordnet ist.

13. Wärmetauschermodul (402) nach einem der vorhergehenden Ansprüche, welches außerdem mindestens einen zweiten Wärmetauscher (406) aufweist, wobei der mindestens eine Querstromlüfter (410) dafür ausgelegt ist, den Luftstrom (F) durch mindestens den ersten Wärmetauscher (404) und den zweiten Wärmetauscher (406) hindurch in Bewegung zu versetzen.

14. Wärmetauschermodul (402) nach dem vorhergehenden Anspruch, wobei der erste (404) und der zweite (406) Wärmetauscher gegenüberliegend, bezogen auf die Strömungsrichtung des Luftstroms (F) hintereinander, angeordnet sind, so dass die von dem Querstromlüfter (410) in Bewegung versetzte Luft nacheinander den ersten Wärmetauscher (404) und dann den zweiten Wärmetauscher (406) durchquert.

15. Wärmetauschermodul (402) nach einem der Ansprüche 13 oder 14, wobei der erste (404) und der zweite (406) Wärmetauscher dazu bestimmt sind, mit unterschiedlichen Kühlkreisläufen im Kraftfahrzeug in Fluidverbindung gebracht zu werden.

16. Wärmetauschermodul (402) nach einem der Ansprüche 13 bis 15, wobei der zweite Wärmetauscher (406) eine einzige Wärmeaustauschstufe umfasst.

17. Wärmetauschermodul (402) nach einem der Ansprüche 13 bis 15, wobei der zweite Wärmetauscher (406) mindestens eine erste Stufe (406a) und eine zweite Stufe (406b) umfasst, wobei der zweite Wärmetauscher (406) so ausgebildet ist, dass die erste Stufe (406a) und die zweite Stufe (406b) innerhalb desselben Kühlkreislaufs (600) des Kraftfahrzeugs in Fluidverbindung stehen.

18. Wärmetauschermodul (402) nach einem der Ansprüche 13 bis 17, wobei der erste und der zweite Wärmetauscher (404,406) dieselbe Wärmeaustauschfläche aufweisen, die zum Beispiel Wärmetauscher mit ähnlichen Abmessungen bildet.

19. Wärmetauschermodul nach einem der vorhergehenden Ansprüche, welches eine Verkleidung (450) umfasst, die eine Aufnahme (L) definiert, die dazu eingerichtet ist, mindestens den ersten Wärmetauscher (404) und den Querstromlüfter (410) aufzunehmen, so dass im Betrieb des Lüfters die von dem Lüfter in Bewegung versetzte Luft wenigstens teilweise von der Verkleidung geführt wird und den ersten Wärmetauscher durchquert.

## Claims

1. Heat exchange module (402) for a motor vehicle, comprising at least:
- a first heat exchanger (404) having at least a first stage (404a) and a second stage (404b), said first heat exchanger being configured such that the first stage (404a) and the second stage (404b) are in fluid connection within the same cooling circuit (600) of the motor vehicle;
- a ventilation device (408) comprising at least one tangential fan (410) for setting in motion an air flow (F) intended to pass through at least the first heat exchanger (404),
- and wherein the first (404a) and second (404b) stages of the first heat exchanger (404) are arranged opposite each other, one behind the other with respect to the direction of flow of the air flow (F), so that the air set in motion by the tangential fan (410) passes successively through the first stage (404a) and then through the second stage (404b) of the first heat exchanger (404), **characterized in that**
- the first stage (404a) comprises a first bundle of heat exchange ducts (420a),
- the second stage (404b) comprises a second bundle of heat exchange ducts (420b),
and **in that** said first heat exchanger (404) comprises a common first header box (434) placed at a first end of the first and second bundles of heat exchange ducts (420a, 420b).

2. Heat exchange module (402) according to the preceding claim, wherein the first stage (404a) and the second stage (404b) of the first heat exchanger (404) are connected to each other by at least one fluid connection (610) allowing the heat-transfer fluid to circulate in series from one stage to the other of the first heat exchanger (404).

3. Heat exchange module (402) according to Claim 1, wherein the first stage (404a) and the second stage (404b) of the first heat exchanger (404) are respectively connected to said cooling circuit (600) via fluid connections allowing the heat-transfer fluid to circulate in parallel in the first stage (404a) and the second stage (404b) within said cooling circuit (600).

4. Heat exchange module (402) according to one of the preceding claims, wherein said first heat exchanger (404) comprises a common second header box (436) placed at a second end of the first and second bundles of heat exchange ducts (420a, 420b), opposite to said first end.

5. Heat exchange module (402) according to any one of the preceding claims, wherein the first and second stages (404a, 404b) have the same heat exchange surface area, for example forming stages of identical dimensions.

6. Heat exchange module (402) according to any one of the preceding claims, wherein the first and second stages (404a, 404b) are oriented parallel to each other.

7. Heat exchange module (402) according to the preceding claim, wherein the first and second stages (404a, 404b) are oriented perpendicular to the direction of flow of the air flow (F) within the heat exchange module (402).

8. Heat exchange module (402) according to any one of the preceding claims, wherein the first and second stages (404a, 404b) form a single heat exchanger (404) chosen from among a condenser or a low-temperature radiator.

9. Heat exchange module (402) according to any one of the preceding claims, wherein the ventilation device (408) is arranged upstream of the first heat exchanger (404) with respect to the direction of flow of the air flow (F), the tangential fan (410) being configured to blow the air flow (F) through said first heat exchanger (404) .

10. Heat exchange module (402) according to any one of Claims 1 to 10, wherein the ventilation device (408) is arranged downstream of the first heat exchanger (404) with respect to the direction of flow of the air flow (F), the tangential fan (410) being configured to suck the air flow through said first heat exchanger (404).

11. Heat exchange module (402) according to any one of the preceding claims, wherein one of the first and second stages (404a, 404b), termed front stage, is arranged between an opening (0) in the front end of the motor vehicle and the other stage.

12. Heat exchange module (402) according to the preceding claim, wherein said front stage is arranged opposite the opening (O) in the front end of the motor vehicle.

13. Heat exchange module (402) according to one of the preceding claims, additionally comprising at least a second heat exchanger (406), the at least one tangential fan (410) being configured to set the air flow (F) in motion through at least the first heat exchanger (404) and through the second heat exchanger (406).

14. Heat exchange module (402) according to the preceding claim, wherein the first (404) and second (406) heat exchangers are arranged opposite each other, one behind the other with respect to the direction of flow of the air flow (F), so that the air set in motion by the tangential fan (410) successively passes through the first heat exchanger (404) and then through the second heat exchanger (406).

15. Heat exchange module (402) according to either one of Claims 13 and 14, wherein the first (404) and second (406) heat exchangers are respectively intended to be placed in fluid connection with separate cooling circuits in the motor vehicle.

16. Heat exchange module (402) according to any one of Claims 13 to 15, wherein the second heat exchanger (406) comprises a single heat exchange stage.

17. Heat exchange module (402) according to any one of Claims 13 to 15, wherein the second heat exchanger (406) comprises at least a first stage (406a) and a second stage (406b), said second heat exchanger (406) being configured so that the first stage (406a) and the second stage (406b) are in fluid connection within the same cooling circuit (600) of the motor vehicle.

18. Heat exchange module (402) according to any one of Claims 13 to 17, wherein the first and second heat exchangers (404, 406) have the same heat exchange surface area, for example forming heat exchangers of similar dimensions.

19. Heat exchange module according to any one of the preceding claims, comprising a fairing (450) defining a housing (L) arranged to receive at least said first exchanger (404) and the tangential fan (410) so that, in operation of the fan, the air set in motion by the fan is at least partially guided by the fairing and passes through the first heat exchanger.
